Europäisches Patentamt

European Patent Office

Office européen des brevets

(19)

(11) EP 0 817 908 B1

(12) EUROPEAN PATENT SPECIFICATION

(45) Date of publication and mention
of the grant of the patent:
**11.08.1999 Bulletin 1999/32**

(21) Application number: **96906102.7**

(22) Date of filing: **25.03.1996**

(51) Int Cl.6: **F02M 21/04**, F02B 43/00

(86) International application number:
**PCT/NL96/00127**

(87) International publication number:
**WO 96/29511 (26.09.1996 Gazette 1996/43)**

(54) **VENTURI MIXING APPARATUS**

VENTURI MISCHVORRICHTUNG

MELANGEUR A VENTURI

(84) Designated Contracting States:
**AT BE CH DE DK ES FI FR GB GR IE IT LI LU NL PT SE**

(30) Priority: **23.03.1995 NL 9500563**

(43) Date of publication of application:
**14.01.1998 Bulletin 1998/03**

(73) Proprietor: **NEDERLANDSE ORGANISATIE VOOR TOEGEPAST-NATUURWETENSCHAPPELIJK ONDERZOEK TNO
2628 VK Delft (NL)**

(72) Inventors:
• **BAERT, Rik, Silveer, Geert
B-2160 Wommelgem (BE)**
• **BECKMAN, Derek, Edward
NL-3036 MN Rotterdam (NL)**
• **VERBEEK, Rudolfus, Petrus
NL-2672 BK Naaldwijk (NL)**

(74) Representative: **de Bruijn, Leendert C. et al
Nederlandsch Octrooibureau
P.O. Box 29720
2502 LS Den Haag (NL)**

(56) References cited:
**DE-U- 8 634 567          US-A- 5 245 977**

## Description

The present invention relates to venturi mixing apparatus according to the preamble of claim 1.

A venturi mixing apparatus of this type is generally known in the prior art. This venturi mixing apparatus is used for mixing, for example, air and a gas. In this context the gas can be a gaseous fuel and/or a exhaust gas which is recycled to, for example, a combustion engine. It is likewise possible to feed solid particles into a gas stream with the aid of a fluid of this type, the solid constituents being carried in the secondary fluid.

However, it must be understood that the invention relates to venturi mixing apparatus for every application where optimum mixing is important.

Other methods for mixing a secondary fluid with a main fluid in a venturi comprise making a series of openings or an annular opening in the wall of the venturi. Said openings are, in general, also made in the vicinity of the throat. Reference is made to DE-U-8634567 in the name of the Applicant.

There are at least three requirements when mixing a secondary fluid into a main fluid by means of a venturi mixing apparatus. Firstly, the aim is for adequate suction for the secondary fluid, which is achieved by means of a constriction in the main flow duct. Secondly, the aim is for optimum, that is to say rapid and homogenous, mixing of the secondary fluid into the main fluid, whilst, on the other hand, the aim is for minimum pressure loss in the main stream.

The pressure loss in the main stream over the mixer is a consequence of frictional losses in the main stream (at the wall of the venturi and of the bar element), of transfer of momentum from the main fluid to the secondary fluid and of the conversion of kinetic energy (dynamic pressure) into turbulent eddies on separation of the flow as a consequence of too great a divergence in the flow duct.

In order to restrict the pressure loss as much as possible with optimum mixing, it is proposed in the publication entitled 'New Gas Mixer for Gas Engines, SAE paper 922361', to make the outflow openings for the secondary fluid in the divergent downstream section of the wall of the venturi.

In the case of this apparatus the position at which the secondary fluid is fed in counteracts the separation of the main stream (in the divergent part of the venturi), with, as a result, less turbulence (and less pressure loss) and consequently severely delayed mixing. Moreover, the introduction of secondary fluid does not take place uniformly distributed over the main fluid.

The aim of the present invention is to provide a venturi mixing apparatus with which, coupled with adequate suction and good mixing, the pressure loss of the main stream in the venturi is reduced as far as possible.

This aim is achieved in the case of a venturi mixing apparatus described above having the characterising features of claim 1.

In apparatus according to the prior art, the bar element was located in the narrowest section, the throat, of the venturi. This gave rise to appreciable obstruction of the flow.

The invention is based on the insight that adequate suction has to be generated by means of adequate constriction at the location of the gas feed.

Furthermore, the mixing process of two fluids (in a venturi mixing apparatus) proceeds in three steps:

1: In the first step the secondary fluid is fed as uniformally as possible into the main fluid. This can be achieved by means of the abovementioned bar element. The stream of secondary fluid is split into a number of partial streams via the outflow openings in the bar element. By distributing the positioning of these openings uniformly over the main stream duct, a uniform macroscopic distribution of secondary fluid over main fluid is achieved.
2: In a second step the partial streams of secondary fluid are broken up and distributed over the main stream by turbulence (in the main stream) at the location of and/or downstream of the feed. By means of the two abovementioned steps, the two fluids are mixed in as short as possible a space of time in an order of scale of the smallest turbulent eddies.
3: As the third and final step, mixing takes place by molecular diffusion processes.

According to the invention, it is ensured that turbulent eddies, and thus pressure loss, occur only where secondary fluid is fed into the main stream; this is downstream of the outflow opening. To prevent upstream separation of the main flow, the cross-section of the mixer must converge up to this point, or must not display more than the abovementioned critical value of divergence. After all, a convergent cross-section leads to an acceleration of the flow and to stable boundary layers.

It is possible to construct the convergence of the venturi at the inlet section and the tapering of the bar element up to the feed for the secondary fluid in such a way that the local free flow surface is a) convergent or b) first convergent and then constant or c) first convergent and then slightly divergent. This divergence must, however, remain below the critical value at which the flow separates from the wall of the venturi and/or of the bar element.

With a view to a uniform feed of secondary fluid over the main stream, the cross-section of the bar element must be sufficiently large with respect to the outflow surface for the secondary fluid. Together with the requirement for convergence of the cross-section of the mixer (as far as the point of outflow of secondary fluid), this signifies that after an initial rapid increase the cross-section of the bar element then decreases in the direction of flow. The sudden change in cross-section at the end section of the bar element (which largely determines the pressure loss) is thus as small as possible.

The bar element can have any shape known from the prior art and can, for example, be of cylindrical construction.

Preferably, this element is so constructed that, after a widened upstream section, the bar element converges in the direction of flow.

The opening or openings in the bar element can be made laterally, as in the prior art, that is to say extend radially with respect to the main stream of fluid.

Preferably, this opening or these openings are made in the end section and extends or extend in the axial direction in the direction of the main flow of fluid. As a result, the outflow losses of the secondary fluid and undesirable disruption of the flow of the main fluid are particularly limited. On the other hand, adequate turbulence is produced in the vicinity of the end section in order to provide for optimum mixing of the secondary fluid.

The bar element can comprise one or more bar elements, which may or may not cross one another.

As indicated above, the bar element can have any shape which is acceptable from the standpoint of flow technology. For instance, it is possible to provide the upstream section of the bar element with a convex shape.

Preferably, the end portion where the gas feed of secondary fluid takes place, is located in the vicinity of the narrowest section of the venturi at the end of the convergent section because the suction is greatest at this point.

The invention will be explained in more detail below with the aid of an illustrative embodiment shown in the drawing. In the drawing:

> Fig. 1 shows, diagrammatically, in cross-section, a preferred embodiment of the invention;
> Fig. 2 shows a cross-section along the line II-II in fig. 1 and
> Fig. 3 diagrammatically the difference between the venturi according to the prior art and the subject application.

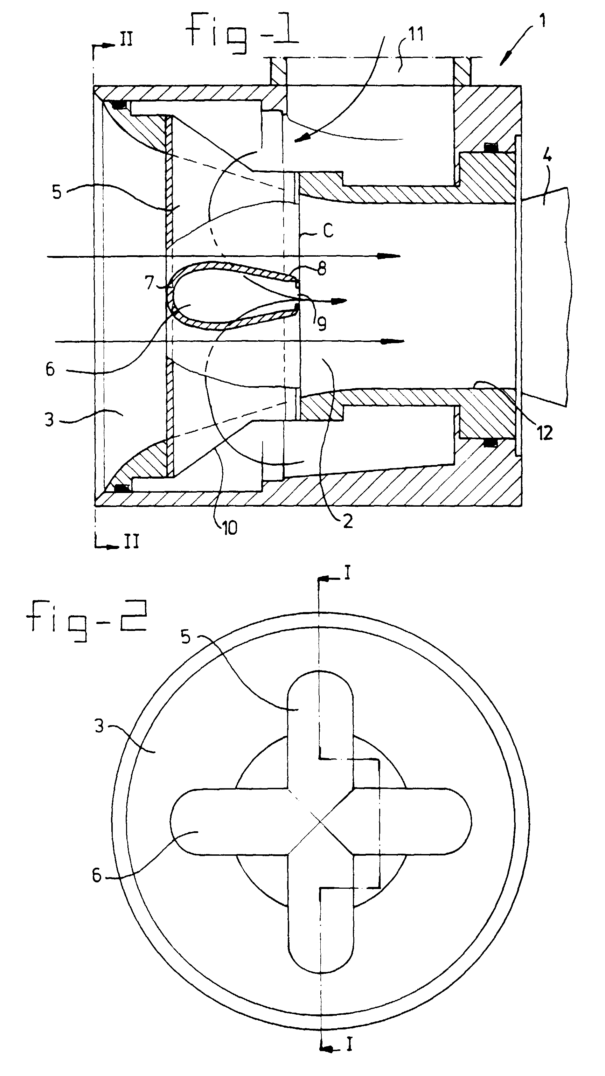

The apparatus according to the invention is indicated in its entirety by 1 in fig. 1. This apparatus comprises a main stream duct 2 consisting of an inlet section 3, which is of convergent construction, a cylindrical section 12 and an outlet section 4, which is of divergent construction. In the embodiment shown between the convergent and divergent section a cylindrical section 12 is introduced, however, it is possible to omit this section. The venturi 1 is constructed so as to provide an annular distribution duct, which is connected to a feed 11 for a secondary fluid. Openings 10 are made in the wall of the convergent section 3, which openings are in connection with a bar element consisting of bar elements 5, 6, which are fixedly secured to the venturi. These bar elements have an upstream section 7 which is convex at the front and from there taper conically and terminate in a slit-shaped opening 9. This opening 9 is located in the vicinity of the narrowest section of the venturi and is made in end section 8. This opening 9 can be replaced by a series of holes.

Secondary fluid issuing from feed opening 11 moves through the space inside the venturi and opening 10 in the bar elements 5, 6 and then flows out at 9 into the main fluid in order to be mixed with the latter.

To prevent separation of the flow, the cross-sectional surface area C of the main stream at the location of the bar elements, between sections 7 and 8, must preferably be convergent or must not diverge more than a critical value.

Although the free cross-sectional surface area is preferably smallest at the location of the outflow opening for the secondary fluid in order to obtain a maximum suction effect, it is possible for a smaller cross-sectional surface area to be encountered upstream. In this context it is essential that the divergence is not such that the flow separates.

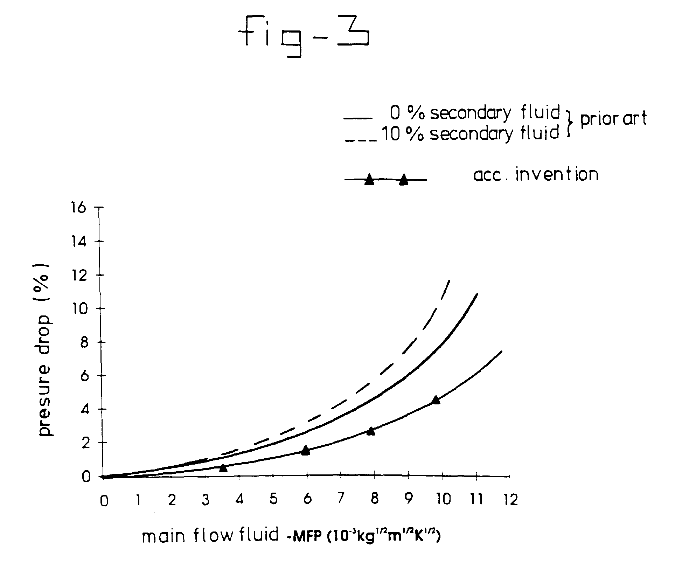

In fig. 3 diagrammatically the difference is shown between the pressure drop realised with the venturi according to the invention and with the venturi according to the prior art. In this graph the pressure drop over the venturi is plotted against the mass flow parameter

$$\dot{m}\sqrt{\frac{T}{P}} \ .$$

From this graph it is clear that with the venturi according to the prior art adding more secondary fluid increases the pressure drop. The single line of the venturi according to the subject invention is valid for the range in which between 0 and 10% secundary fluid (referred to the main fluid) is added. From this graph it is clear that the new venturi is not sensitive for adding of secundary fluid within a restricted range of secundary fluid. Furthermore it is clear that the pressure drop is considerably reduced with regard to the pressure drop of the venturi according to the prior art.

Although the invention has been described above with the aid of a preferred embodiment, it must be understood that numerous modifications can be made thereto, which are obvious to a person skilled in the art, without going beyond the scope of the claims.

For instance, it is possible to construct the venturi in any manner known from the prior art. Furthermore, the bar element can comprise a single bar element or more than two bar elements, which may or may not cross one another. The shape of each bar element can be modified according to need and does not necessarily have to be convergent in the direction of flow from the upstream section.

## Claims

1. Venturi mixing apparatus (1) comprising a venturi having a main flow duct (2), said main flow duct comprising at least one inlet section (3) converging in the direction of flow of the main fluid and a subsequent divergent outlet section (4), means being present in the venturi for supplying a secondary fluid, which has to be mixed with the main fluid, which means comprise a bar element (5, 6) being firmly secured to the venturi, at least part of said bar element extending into the main flow duct and having a widened upstream section (7) and a downstream end section (8), characterized in that the widest part of the bar element (5, 6) is within the convergent inlet section (3) of said main flow duct.

2. Apparatus according to Claim 1, wherein the widened upstream section (7) tapers to the downstream end section (8) which is of narrowed construction.

3. Apparatus according to one of the preceding claims, wherein the bar element is provided with at least one opening (9) at the downstream end section which opening extends essentially in the direction of flow of the main fluid and which is in connection with the feed (11) for the secondary fluid.

4. Apparatus according to one of the preceding claims, wherein the bar element comprises a number of bar elements (5, 6) crossing one another.

5. Apparatus according to one of the preceding claims, wherein the upstream section (7) has a convex shape.

6. Apparatus according to one of the preceding claims, wherein the free flow surface (C) of the main duct between the upstream section (7) and the downstream end section (8) converges up to the feed of the secondary fluid.

7. Apparatus according to Claim 1-5, wherein the free flow surface (C) of the main duct between the upstream section (7) and the downstream end section (8) first converges and is subsequently constant up to the feed of the secondary fluid.

8. Apparatus according to one of the preceding claims 1-5, wherein the free flow surface (C) of the main duct between the upstream section (7) and the downstream end section (8) first converges and subsequently slightly diverges, the divergency being below the critical value at which the flow separates from the wall of the venturi and/or the bar element.

## Patentansprüche

1. Venturi-Mischvorrichtung (1), umfassend ein Venturi bzw. Venturirohr mit einem Hauptstromkanal (2), wobei der Hauptstromkanal wenigstens einen Einlaßabschnitt (3), welcher in der Strömungsrichtung des Hauptfluids konvergiert bzw. sich verjüngt, und einen nachfolgenden, divergierenden bzw. sich aufweitenden Auslaßabschnitt (4) aufweist, wobei Einrichtungen in dem Venturi zur Zufuhr eines Sekundärfluids vorgesehen sind, welches mit dem Hauptfluid zu vermischen ist, wobei die Einrichtungen ein Sperrelement (5, 6) umfassen, welches fest am Venturi festgelegt ist, wobei wenigstens ein Teil des Sperrelements sich in den Hauptstromkanal erstreckt und einen aufgeweiteten, stromaufwärtigen Abschnitt (7) und einen stromabwärtigen Endabschnitt (8) aufweist, dadurch gekennzeichnet, daß der breiteste Teil des Sperrelements (5, 6) sich innerhalb des konvergierenden Einlaßabschnitts (3) des Hauptstromkanals befindet.

2. Vorrichtung nach Anspruch 1, worin der aufgeweitete, stromaufwärtige Abschnitt (7) sich zu dem stromabwärtigen Endabschnitt (8) verjüngt, welcher eine verengte Konstruktion aufweist.

3. Vorrichtung nach einem der vorangehenden Ansprüche, worin das Sperrelement mit wenigstens einer Öffnung (9) an dem stromabwärtigen Endabschnitt versehen ist, welche Öffnung sich im wesentlichen in der Strömungsrichtung des Hauptfluids erstreckt und welche in Verbindung mit der Zufuhr (11) für das Sekundärfluid ist.

4. Vorrichtung nach einem der vorangehenden Ansprüche, worin das Sperrelement eine Anzahl von Sperrelementen (5, 6) umfaßt, welche einander kreuzen.

5. Vorrichtung nach einem der vorangehenden Ansprüche, worin der stromaufwärtige Abschnitt (7) eine konvexe Form aufweist.

6. Vorrichtung nach einem der vorangehenden Ansprüche, worin die freie Strömungsoberfläche (C) der Hauptleitung bzw. des Hauptkanals zwischen dem stromaufwärtigen Abschnitt (7) und dem stromabwärtigen Endabschnitt (8) zu der Zufuhr des Sekundärfluids konvergiert.

7. Vorrichtung nach Anspruch 1 bis 5, worin die freie Strömungsoberfläche (C) des Hauptkanals zwischen dem stromaufwärtigen Abschnitt (7) und dem stromabwärtigen Endabschnitt (8) zuerst konvergiert und nachfolgend konstant bis zur Zufuhr des Sekundärfluids ist.

**8.** Vorrichtung nach einem der vorangehenden Ansprüche 1 bis 5, worin die freie Strömungsoberfläche (C) des Hauptkanals zwischen dem stromaufwärtigen Abschnitt (7) und dem stromabwärtigen Endabschnitt (8) zuerst konvergiert und nachfolgend leicht divergiert, wobei die Divergenz bzw. Aufweitung unter dem kritischen Wert ist, bei welchem sich die Strömung von der Wand des Venturi und/oder des Sperrelements ablöst.

## Revendications

**1.** Appareil mélangeur à venturi (1) comprenant un venturi possédant un conduit d'écoulement principal (2), ledit conduit d'écoulement principal comprenant au moins une section d'entrée (3), qui converge dans la direction d'écoulement du fluide principal, et une section de sortie divergente aval (4), des moyens étant présents dans le venturi pour amener un fluide secondaire, qui doit être mélangé au fluide principal, lesquels moyens comprennent un élément en forme de barre (5, 6) fermement fixé au venturi, au moins une partie dudit élément en forme de barre pénétrant dans le conduit d'écoulement principal et possédant une section amont élargie (7) et une section d'extrémité aval (8), caractérisé en ce que la partie la plus large de l'élément en forme de barre (5,6) est située dans la section d'entrée convergente (3) dudit conduit d'écoulement principal.

**2.** Appareil selon la revendication 1, dans lequel la section amont élargie (7) se rétrécie en direction de la section d'extrémité aval (8), qui est une structure rétrécie.

**3.** Appareil, selon l'une des revendications précédentes, dans lequel l'élément en forme de barre est pourvu au moins d'une ouverture (9) située au niveau de la section d'extrémité aval, laquelle ouverture s'étend essentiellement dans la direction d'écoulement dudit fluide principal et est reliée à l'alimentation (11) pour le fluide secondaire.

**4.** Appareil selon l'une quelconque des revendications précédentes, dans lequel l'élément en forme de barre comprend un certain nombre d'éléments en forme de barres (5, 6) qui se croisent.

**5.** Appareil selon l'une des revendications précédentes, caractérisé en ce que la section amont (7) possède une forme convexe.

**6.** Appareil selon l'une quelconque des revendications précédentes, selon lequel la surface d'écoulement libre (C) du conduit principal entre la section amont (7) et la section d'extrémité aval (8) convergent vers la zone d'alimentation du fluide secondaire.

**7.** Appareil selon la revendication 1-5, dans lequel la surface d'écoulement libre (C) du conduit principal entre la section amont (7) et la section d'extrémité aval (8) converge tout d'abord et est constante jusqu'au système d'amenée du fluide secondaire.

**8.** Appareil selon l'une des revendications précédentes 1-5, dans lequel la surface d'écoulement libre (C) du conduit principal entre la section amont (7) et la section d'extrémité aval (8) converge tout d'abord, puis diverge légèrement, la divergence étant inférieure à la valeur critique pour laquelle l'écoulement se détache de la paroi du venturi et/ou de l'élément en forme de barre.

Fig-1

Fig-2

# fig-3

— 0 % secondary fluid } prior art
--- 10 % secondary fluid }

▲ ▲ acc. invention

presure drop (%)

main flow fluid -MFP ($10^{-3}kg^{1/2}m^{1/2}K^{1/2}$)